# EUROPÄISCHE PATENTSCHRIFT

(11) **EP 1 333 728 B1**
(45) Veröffentlichungstag und Bekanntmachung des Hinweises auf die Patenterteilung: **06.08.2008**
(21) Anmeldenummer: 01982483.8
(22) Anmeldetag: 13.11.2001
(51) Int. Cl.: A23K 1/16, A23K 1/00

(54) **FUTTERMITTEL**
FEEDSTUFF
PRODUIT ALIMENTAIRE POUR ANIMAUX

(30) Priorität: 14.11.2000 DE 10056345
(43) Veröffentlichungstag der Anmeldung: 13.08.2003
(73) Patentinhaber: J. Rettenmaier & Söhne GmbH + Co., 73494 Rosenberg (DE)
(72) Erfinder: BACKERS, Thomas, 73494 Rosenberg (DE)
(74) Vertreter: Grosse - Schumacher - Knauer - von Hirschhausen
(86) Internationale Anmeldenummer: PCT/EP2001/013117
(87) Internationale Veröffentlichungsnummer: WO 2002/039827

(56) Entgegenhaltungen:
- EP-A- 0 091 767
- EP-A- 0 614 615
- DD-A- 144 862
- Y. HENRY ET AL.: "Effets nutritionelles de l'incorporation de cellulose purifiée dans le régime du porc en croissance-finition" ANN. ZOOTECH., Bd. 18, Nr. 4, 1969, Seiten 371-384, XP001064281
- PATENT ABSTRACTS OF JAPAN vol. 1998, no. 10, 31. August 1998 (1998-08-31) & JP 10 127232 A (NATL FEDELATION OF AGRICULT COOP ASSOC;KAGAKU SHIRYO KENKYUSHO:KK), 19. Mai 1998 (1998-05-19)
- DATABASE WPI Section Ch, Week 197652 Derwent Publications Ltd., London, GB; Class A11, AN 1976-97040X XP002192636 & JP 51 129796 A (NIHON NOSAN KOGYO KK), 11. November 1976 (1976-11-11)

## Beschreibung

Die Erfindung bezieht sich auf ein Futtermittel der dem Oberbegriff des Anspruchs 1 entsprechenden Art.

Die Aufzucht von Tieren findet heute meist nicht mehr in natürlicher Umgebung, sondern im Wege einer Massentierhaltung statt, bei der viele Tiere in beengten Verhältnissen ohne freien Auslauf gehalten werden, was zwar der Beschleunigung der Aufzucht zugute kommen kann, aber andererseits manche neuen spezifischen Probleme mit sich bringt.

Es sind vielfältige Zusätze zu Futtermitteln für derartige Tiere bekannt. Trotz dieser Zusätze und trotz der im Futter erzielbaren hohen Energiedichte ist jedoch die Ausbeute der Tiere nach wie vor verbesserungsfähig. Mit Ausbeute soll einerseits des reine Gewichtsverhältnis zwischen eingesetztem Futtermittel und Schlachtgewicht der Tiere bedeuten, doch gehen auch Merkmale wie Qualität, insbesondere Fettarmut des Fleisches und die Verringerung von Krankheiten und Morbidität der Tiere und Verbesserung der Befindlichkeit der Tiere in diesen Begriff ein. Ein weiterer Aspekt ist das Problem des Stallklimas, welches bei der großen Zahl von Tieren pro Quadratmeter Grundfläche des Stalls häufig durch eine sehr übelriechende, ammoniakhaltige Atmosphäre gekennzeichnet ist, die Atemwege und Lunge der Tiere beeinträchtigt und beim Ausbringen der Stalleinstreu bzw. Gülle eine erhebliche Umweltbelästigung darstellt. Entsprechende Probleme treten in Aufzuchtbecken von Fischen auf.

Gattungsgemäße Futtermittel mit einem funktionsverbessernden Zusatz an reiner feinteiliger Cellulose sind mehrfach bekannt.

So ist aus der EP 91 767 A2 ein Futtermittelgranulat entnehmbar, welchem eine wirksame Menge eines Polysaccharids als Verdickungsmittel und außerdem eine Menge eines Metallsalzes, Oxids oder Hydroxids als integrierende Bestandteile zugemischt sind. Das Polysaccharid kann mikrokristalline Cellulose sein.

Aus der Schriftstelle Y. Henry et al. "Effets nutritionels de I_incorporation de cellulose purifiée dans le regime du porc en croissance-finition" ANN. ZOO-TECH., Bd. 18, Nr. 4, 1969, Seiten 371-384, XP001064281, Seite 373 - Seite 376; Tabellen 1-4 geht hervor, Schweinefutter gereinigte Holzcellulose von fasriger Textur oder ein feines Cellulosepulver zuzumischen, um die Fleischqualität und die Nahrungsaufnahme bei verschiedenen Gehalten an Cellulose zu untersuchen.

Aus der EP 614 615 A1 ergibt sich der Gedanke, dem Futter für Wiederkäuer natürliche Makromoleküle in Gestalt von fasriger Cellulose zuzusetzen, um die Verabreichung von Wirkstoffen zu ermöglichen, die erst im hinteren Bereich des Verdauungstraktes zur Wirkung kommen sollen.

Auch die DD-PS 144 862 befaßt sich mit der Applikation von chemischen bzw. pharmazeutischen Wirkstoffen in Futtermitteln. Die Wirkstoffe werden mit mikrokristalliner Cellulose gleichmäßig vermischt und dann aus dieser Mischung und standardisiertem Trockenfutter Formkörper gebildet, die für Fütterungsversuche an Tieren einsetzbar sind.

Der Erfindung liegt die Aufgabe zugrunde, die bekannten Futtermittel für in der Aufzucht, in der Mast oder der Trächtigkeit befindliche Nutztiere zu verbessern.

Diese Aufgabe wird durch die in Anspruch 1 wiedergegebene Erfindung gelöst.

Das Futtermittel besteht also aus dem eigentlichen die Ernährung tragenden Futter und den Zusätzen. Die Art und Zusammensetzung des Futters schwankt und wird von den Herstellern, oft sogar von den gewerblichen Tierhaltern, nach für die betreffenden Tierarten vorliegenden Erfahrungen der auch jahreszeitlich veränderlichen Futter-Vorratslage angepaßt. Insoweit läßt sich also eine feste Zusammensetzung des eigentlichen Futters nicht angeben.

Hier geht es aber um die funktionsverbessernden Zusätze.

Der Zusatz an reiner Cellulose verbessert, wie überraschenderweise gefunden wurde und wie die durchgeführten umfangreichen Versuche bestätigt haben, die Energieaufnahme speziell bei hoher Energiedichte des Futters. Durch die unlöslichen Fasern werden die Magen- und Darmaktivitäten stimuliert und Mykotoxine gebunden. Um die gleichen gewichtsmäßigen Endergebnisse zu erzielen, waren etwa 10 % weniger Futtereinsatz nötig. Die Bein- und Brustmuskeln bei Geflügel-Versuchstieren waren gegenüber den Vergleichstieren deutlich stärker ausgeprägt, was einen höheren Anteil an wertvollen Teilen ergibt.

Ein weiterer wichtiger Faktor ist die Verringerung des Ammoniakgehaltes in der Gülle. Dies ist darauf zurückzuführen, daß der Cellulose-Zusatz wie im Ballaststoff in der menschlichen Ernährung funktioniert und die Tiere dadurch eine besser wirksame und gesündere Darmflora erhalten. Dadurch wiederum wird mehr Stickstoff aus den Aminosäuren des Futters resorbiert und zu Protein synthetisiert. Dadurch wachsen die Tiere schneller und weisen außerdem einen erhöhten Magerfleischanteil auf, was für die Verringerung des Cholesteringehalts der menschlichen Ernährung von Bedeutung ist. Es wird also die Fleischqualität verbessert. Die Tiere sind mehr rosa. Die Eisenresorption ist verbessert. Die Tiere sind lebhafter.

Der in die erhöhte Proteinsynthese gehende Stickstoffanteil kann nicht mehr als Ammoniak ausgeschieden werden, die Stalluft bleibt weitaus weniger belastet. Messungen haben ergeben, daß der NH₃-Gehalt in einem mit dem erfindungsgemäßen Futtermittel betriebenen Hühnerstall auf 2 ppm gesenkt war, im Vergleich zu 15 ppm bei einem mit einem herkömmlichen Futtermittel betriebenen Stall. Durch die Verbesserung der Stallatmosphäre sind die Tiere widerstandsfähiger und resistenter gegen Atemwegserkrankungen und Herz-Kreislauf-Erkrankungen, wodurch entsprechende Medikamentierung reduziert bzw. erübrigt wird und sich entsprechende Ersparnisse ergeben.

Die Verringerung des NH₃-Gehalts in der Gülle verringert die für deren Ausbringen notwendige Feldfläche.

Der erfindungsgemäße Futtermittelzusatz wirkt, wie bereits erwähnt, wie ein Zusatz an unlöslichen Ballaststoffen. Es könnte die Frage auftreten, ob sich die vorerwähnten Effekte nicht auch mit jedem anderen unlöslichen Rohfasermaterial erzielen lassen. Die Versuche haben jedoch gezeigt, daß andere Rohfasern Nebeneffekte wie Nährstoffbindung, verringerte Mineralstoffverfügbarkeit, Verschiebung des Na-Mg-Gleichgewichtes und dergleichen aufweisen und auch nicht in der Lage sind, Ammoniak und Mykotoxine zuverlässig und in dem gleichen Umfang zu binden wie reine Cellulose.

Die beste Wirkung wird erzielt, wenn der Zusatz im wesentlichen aus fasriger Pulvercellulose besteht, die vorteilhaft einen Anteil von mindestens 50 Gew.-% oder sogar mindestens 90 Gew.-% (Anspruch 2) α-Cellulose enthalten sollte und aus Getreidefasern hergestellt sein kann (Anspruch 3). Ein als geeignet nachgewiesenes Celluloseprodukt ist Arbocel BWW 40 der Anmelderin mit Faserlängen von 50 - 250 µm.

Eine wichtige Weiterentwicklung der Erfindung ist die Beigabe des Zusatzes an reiner Cellulose in Kombination mit einem Zusatz eines prebiotischen Mittels. Die unlösliche Rohfaserquelle Cellulose regt generell die Darmtätigkeit an. Sie wird nunmehr mit einer löslichen Komponente kombiniert, welche als Substrat für die Mikroorganismen der Darmflora wirkt und gewissermaßen zur Ernährung derselben dient (Anspruch 4). Dadurch wird die vorteilhafte Wirkung der Cellulose weiter gefördert.

Als besonders vorteilhaft hat sich als kombinatorischer Zusatz gemäß Anspruch 5 ein prebiotisches Mittel herausgestellt, welches ein Algenpräparat ist und welches gemäß Anspruch 6 ein Natrium-Alginat in Lösung sein kann, welches gemäß Anspruch 7 aus der Braunalge Ascophyllum nodosum gewonnen sein kann.

Das Algenpräparat sollte einen Gehalt von mindestens 5 Gew.-% an bioverfügbarer Polyuronsäure aufweisen, um eine ausreichende Wirkung zu zeitigen (Anspruch 8).

Der Anteil des prebiotischen Mittels an der Gesamtmenge des Zusatzes an reiner Cellulose und des Zusatzes an dem prebiotischen Mittel sollte nach Anspruch 9 6 - 28 Gew.-% betragen.

Gemäß Anspruch 10 sollte der Zusatz an feinteiliger Cellulose einschließlich des prebiotischen Mittels in einem Anteil von 0,2 bis 18 Gew.-% des Futtermittels zugegen sein, wobei für die meisten Tierarten Mengenanteile im unteren Bereich dieser Spanne ausreichend sind.

Das erfindungsgemäße Futtermittel ist zwar auch für Haustiere wie Ziervögel oder Meerschweinchen und für freilaufende Tiere auf Bauernhöfen sowie für ausgewachsene Tiere wie Milchkühe gedacht, jedoch in erster Linie für gewerblich gehaltene Aufzuchttiere vorgesehen, die stark konzentriert, d.h. mit engem Lebensraum unter nicht natürlichen Lebensbedingungen gehalten werden, d.h. in Aufzuchtbatterien, Fischzuchtanlagen und dgl. (Anspruch 11 bzw. 12).

Ein erstes wichtiges Anwendungsbeispiel des erfindungsgemäßen Futtermittels ist Futter für Nutzgeflügel (Anspruch 13), insbesondere Hühnerfutter (Anspruch 14).

Hierbei kann der Anteil des erfindungsgemäß vorhandenen Zusatzes 0,2 bis 3,0 Gew.-% des Futtermittels betragen (Anspruch 15).

Ein weiterer wichtiger Anwendungsfall ist der Einsatz des erfindungsgemäßen Futtermittels als Schweinefutter (Anspruch 16), wobei die Gesamtmenge des Zusatzes an reiner Cellulose und des Zusatzes an prebiotischem Mittel 0,3 - 2,5 Gew.-% des Futtermittels betragen sollte (Anspruch 17).

Das erfindungsgemäße Futtermittel hat Vorteile sowohl für Zuchtsauen als auch für die Ferkelaufzucht und die Schweinemast. Die Cellulose motiviert und stimuliert den Darmtrakt, bindet Flüssigkeit und sorgt für bessere Kotkonsistenz. Es wurde in Versuchen beobachtet, daß die Sauen mehr fressen und die Nahrung lieber aufnehmen. Bei den Versuchen wurde das bereits erwähnte mit dem Algenpräparat kombinierte Futtermittel verwendet. Das Al-genpräparat ernährt die Darmflora und verhindert das Wachstum von toxischen Organismen im Darm. Somit wird die Darmflora gesünder und kann die Energie des Futters besser resorbieren. Es wird gewissermaßen eine ausgeglichenere Diät angeboten, um die vorhandene Energie des Futters besser aufzunehmen. Eine Zuchtsau soll bereits über die Muttermilch Spuren des Algenpräparates an die Ferkel weitergeben. Somit wird sogleich für eine gesündere Darmflora gesorgt, welches bei den Ferkeln die Futterverwertung steigert, die Ferkel stabiler macht und Durchfallerkrankungen bei den Ferkeln verhindert.

Durchfallerkrankungen bei Ferkeln sind ein Schlüsselproblem, welches oft mit Zinkoxid gelöst wird. Dieses Mittel ist als Zusatz zu Futtermitteln heute verboten, weil es sich bei der Ausbringung nicht abbaut und die Umwelt kontaminiert. Außerdem hat es ernährungsphysiologische Nachteile. Durch Zinkoxid werden die Darmzotten der Jungtiere stark demoliert, was zwar momentan den Durchfall verhindert, die Darmzotten allerdings so schädigt, daß weniger Futter verwertet werden kann. Die Mästereien erhalten dann quasi vorgeschädigte Ferkel. Das erfindungsgemäße Futtermittel hingegen baut bei den Ferkeln sogleich eine gute Darmflora auf und ist in der Lage, die Tiere stabiler zu machen. Die Kotkonsistenz bei den Ferkeln ist verbessert. Auch bei hohen Außentemperaturen findet eine gute Nahrungsaufnahme statt. Bei der Fütterung mit dem erfindungsgemäßen Futtermittel zeigen die Ferkel eine bessere Gesundheit und eine stark erhöhte, stabile tägliche Zunahme, was dazu führt, daß die Ferkel nach kürzerer Zeit abgesetzt werden können. Somit wird die Sau weniger belastet, verliert weniger Gewicht und regeneriert sich schneller. sie kann früher wieder belegt werden. Im Ergebnis wird die Produktivität gesteigert.

Durch die bessere Gesundheit und Widerstandsfähigkeit der Tiere lassen sich die Kosten für Medikamentierungen und Immunisierungen deutlich senken.

Weiterhin ist eine gesteigerte Triebhaftigkeit der Sauen festzustellen, was die Rate der Umrauscher (Fehlbesamungen) vermindert.

Es gibt also mehrere indirekte Vorteile des erfindungsgemäßen Futtermittels, die seine Kosten mehr als rechtfertigen.

Ein weiteres wichtiges Gebiet für die Erfindung ist Nutzfischfutter (Anspruch 18), wobei eine Gesamtmenge des Zusatzes von 0,3 bis 6 Gew.-% zweckmäßig ist (Anspruch 19).

Als eine wichtige Wirkung wurde dabei in Versuchen festgestellt, daß durch die Zugabe von Pulvercellulose zu dem Nutzfischfutter die Fäkalien vom flüssigen in einen weitgehend festen Zustand übergehen und beim sogenannten Pool-Farming in Fischzuchtbecken, in denen kein oder nur gering fließendes Wasser vorhanden ist, sedimentieren und in Bodennähe abgezogen werden können. Davon profitiert die Wasserqualität. Die Fische leben also nicht mehr in einem von ihnen selbst verunreinigten Wasser und weisen eine bessere Gesundheit auf. Am besten funktionieren in diesem Zusammenhang langfasrige Cellulosetypen mit einem α-Cellulosegehalt von über 80 Gew.-%, zum Beispiel die Type FIF 400 der Firma Rettenmaier & Söhne GmbH & Co. in 73494 Rosenberg mit mittleren Faserlängen im Bereich von etwa 2000 µm.

Ein weiteres wichtiges Anwendungsfeld der Erfindung ist die Fütterung von Kälbern.

Die Kälber können bei der Fütterung mit dem erfindungsgemäßen Futtermittel die Energie besser aufnehmen und sind gesünder und widerstandsfähiger. Wird aber Silage oder werden andere Rohfaserquellen dem Futtermittel zugesetzt, so wird aufgrund der höheren Eisengehalte der herkömmlichen Rohfaserquellen das Fleisch schnell rot und verliert die gewünschte helle Farbe. Außerdem dürfte Cellulose das einzige Rohfaserkonzentrat sein, welches sich ohne weiteren Produktionsschritt und/oder Fütterungsschritt in die Kälbermilch einmischen läßt.

Weitere Einsatzgebiete des erfindungsgemäß mit einem Zusatz an reiner Cellulose bzw. der mit prebiotischen Substanzen veredelten Cellulose versehenen Futtermittels sind Pelztiere (Anspruch 21), Kaninchen und sonstige Nager (Anspruch 22) sowie Labortiere (Anspruch 23).

Nachstehend sind zwei Versuchsbeispiele über die Wirkung eines Zusatzes an reiner feinteiliger fasriger Pulvercellulose aus dem Bereich der Hähnchenaufzucht angegeben.

### Versuchsbeispiel 1

Hierbei ergab sich bei Verwendung des erfindungsgemäßen Futtermittels ein Schlachtgewicht von 35 bis 41 kg Huhn/qm, verglichen mit einem Ergebnis von 28 bis 33 kg Huhn/qm bei üblicher Befütterung. Der EWW-index lag bei

der Erfindung bei 241 bis 288, während normalerweise 220 bis 240 erzielt werden. Die Morbidität der Hühner konnte von 6 % auf 2,36 %, in anderen Fällen auf 0,4 bis 0,6 % gesenkt werden. Die Feed Conversion Rate betrug 1,89, vorher 2,06. Die Hähnchen hatten ein mittleres Endgewicht von etwa 2,1 kg. Zugrunde lagen 80 000 Hähnchen der Rasse Hubbard, die in einer Belegungsdichte von 17 Stck/qm gehalten wurden.

Bei einem konventionellen Stall betrug der Mehrerlös durch höhere tägliche Zunahme der Tiere etwa DM 6000,-, dem Mehrkosten durch das erfindungsgemäße Futtermittel in Höhe von DM 3000,- gegenüberstanden. Nicht nur rein gewichtsmäßig, sondern auch qualitätsmäßig ist eine Verbesserung festzustellen.

### Versuchsbeispiel 2

Bei diesem Versuchsbeispiel wird die Wirkung der Zugabe von reiner feinteiliger fasriger Pulvercellulose des Typs Arbocel BWW 40 zu einem Futtermittel für die Hähnchenaufzucht untersucht.

Tabelle 1 zeigt die Zusammensetzung der verschiedenen Futtermittel. C ist der Nullversuch ohne zugesetztes Arbocel BWW 40, E1 bis E4 sind Versuchsfuttermittel mit verschiedenen Anteilen an Arbocel BWW 40.

**Tabelle 1**

| **Errechnete Zusammensetzung der Versuchsfuttermittel (Gew.-%)** | | | | | |
|---|---|---|---|---|---|
| **Nährstoffe** | **Versuchsfuttermittel ⁽¹⁾** | | | | |
| | **C** | **E1** | **E2** | **E3** | **E4** |
| ME, Mj/kg | 13.32 | 13.31 | 13.32 | 13.31 | 13.32 |
| Rohprotein | 21.02 | 21.03 | 21.01 | 21.00 | 21.01 |
| Rohfaser | **3.00** | **L⁽²⁾** | **M⁽³⁾** | **H⁽⁴⁾** | **L-NMS⁽⁵⁾** |
| Lysin | 1.31 | 1.31 | 1.31 | 1.31 | 1.31 |
| Metyhionin | 0.53 | 0.53 | 0.53 | 0.53 | 0.53 |
| Met + Cys | 0.89 | 0.89 | 0.89 | 0.89 | 0.89 |
| Calcium | 0.90 | 0.90 | 0.90 | 0.90 | 0.90 |
| Verfügbarer Phosphor | 0.48 | 0.48 | 0.48 | 0.48 | 0.48 |
| Salz | 0.39 | 0.39 | 0.39 | 0.39 | 0.39 |

| | | | | | |
|---|---|---|---|---|---|
| 1) C - Kontrollfuttermittel (ohne Arbocel BWW 40) E1, 2, 3, 4 - Versuchsfuttermittel 2) L - Geringer Zusatz an Arbocel BWW 40 3) M - Mittlerer Zusatz an Arbocel BWW 40 4) H - Höherer Zusatz an Arbocel BWW 40 5) L - NMS Geringer Zusatz an Arbocel BWW 40 in einer natürlichen stabilisierenden Mischung | | | | | |

Tabelle 2 zeigt die Auswirkung der Fütterung auf verschiedene Performancewerte.

**Tabelle 2**

| **Performance Indices von Hähnchen (mindestens 26 000 pro Gruppe)** | | | | | | |
|---|---|---|---|---|---|---|
| **Gruppe ⁽¹⁾** | **Lebenstage (d)** | **Mittleres Körpergewicht (g)** | **Futtermitteleinsatz (kg/kg)** | | **Sterblichkeit %** | **EEI (2)** |
| | | | **Körpergewicht** | **Gewichtszunahme** | | |
| **C** | **0-21** | **815.29⁽³⁾** | **1.29** | **1.36** | **0.00** | **286** |
| | | 105.85⁽⁴⁾ | 0.05 | 0.05 | | 33 |
| | **0-42** | **2201.80** | **1.79** | **1.83** | **4.76** | **286** |
| | | 229.97 | 0.21 | 0.21 | | 42 |
| **E1** | **0-21** | **857.00** | **1.27** | **1.34** | **0.00** | **304** |
| | | 75.10 | 0.02 | 0.02 | | 18 |
| | **0-42** | **2348.50** | **1.65** | **1.68** | **0.00** | **333** |
| | | 252.12 | 0.06 | 0.03 | | 11 |
| **E2** | **0-21** | **802.06** | **1.29** | **1.36** | **0.00** | **280** |
| | | 90.46 | 0.03 | 0.04 | | 32 |
| | **0-42** | **2266.24** | **1.68** | **1.71** | **0.00** | **315** |
| | | 218.76 | 0.04 | 0.05 | | 9 |
| **E3** | **0-21** | **761.76** | **1.27** | **1.35** | **0.00** | **269** |
| | | 152.41 | 0.05 | 0.05 | | 23 |
| | **0-42** | **2257.60** | **1.67** | **1.70** | **0.00** | **317** |
| | | 302.85 | 0.05 | 0.06 | | 13 |
| **E4** | **0-21** | **834.67** | **1.27** | **1.35** | **0.00** | **295** |
| | | 74,68 | 0.04 | 0.04 | | 12 |
| | **0-42** | **2399.38** | **1.65** | **1.68** | **0.00** | **341** |
| | | 214.07 | 0.02 | 0.02 | | 8 |

| | | | | | | |
|---|---|---|---|---|---|---|
| 1) C - Kontrollgruppe E1, 2, 3, 4 - Versuchsgruppen 2) EEI - European Efficiency Index 3) Mittelwert 4) Standardabweichung | | | | | | |

Tabelle 3 zeigt die Anteile der verschiedenen Körperteile des Hähnchens, die verschiedene Preise erzielen.

**Tabelle 3**

| **Schlachtanalyse (%) von Hähnchen (Körpergewicht vor dem Schlachten = 100%)** | | | | | |
|---|---|---|---|---|---|
| **Specifikation** | **Gruppe⁽¹⁾ E2** | | | | |
| | **C** | **E1** | | **E3** | **E4** |
| **Schlachtkörperausbeute** | **74,49⁽²⁾** | **75.53** | **74.72** | **74.64** | **75.71** |
| | 1.14⁽³⁾ | 1.15 | 0.48 | 1.85 | 1.03 |
| | | | | | |
| **Anteile des Schlachtkörpers Giblets:** | | | | | |
| **Leber** | **2.02** | **2.21** | **2.35** | **2.18** | **2.17** |
| | 0.13 | 0.21 | 0.32 | 0.15 | 0.23 |
| | | | | | |
| **Gizzard** | **1.88** | **1.87** | **1.95** | **2.12** | **1.79** |
| | 0.33 | 0.22 | 0.33 | 0.41 | 0.24 |
| | | | | | |
| **Herz** | **0.47** | **0.45** | **0.50** | **0.52** | **0.47** |
| | 0.05 | 0.04 | 0.08 | 0.06 | 0.05 |
| | | | | | |
| **Brustmuskeln** | **21.87** | **23.35** | **21.48** | **22.32** | **22.98** |
| | 1.43 | 0.87 | 1.09 | 0.45 | 1.32 |
| | | | | | |
| **Beinmuskeln** | **21.62** | **23.55** | **21.77** | **23.55** | **22.81** |
| | 1.84 | 1.59 | 1.61 | 1.54 | 0.91 |
| | | | | | |
| **Gesamtmuskelfleisch** | **43.49** | **46.90*** | **43.25** | **45.87** | **45.79** |
| | 2.38 | 1.02 | 0.99 | 1.46 | 1.29 |
| **Bandfett** | **3.71** | **2.13*** | **3.80** | **1.90*** | **2.51** |
| | 1.20 | 0.95 | 0.47 | 0.52 | 0.65 |

| | | | | | |
|---|---|---|---|---|---|
| 1) C - Kontrollgruppe E1, 2, 3, 4 - Versuchsgruppen 2) Mittelwert 3) Standardabweichung * P = 0.05 | | | | | |

Tabelle 4 stellt eine auf dieser Basis erstellte Kosten-Gewinn-Studie dar, die aufgrund der Fütterungsergebnisse und der für die einzelnen Teile der Hähnchen erzielbaren Verkaufspreise gewonnen wurde. Es zeigt sich in den beiden letzten Zeilen von Tabelle 4, daß trotz der zusätzlichen Kosten für das Arbocel BWW 40 bei den Hähnchen der Versuchsgruppen E1 bis E4 ein deutlicher zusätzlicher Gewinn gegenüber den Hähnchen der Kontrollgruppe erzielt wird.

**Tabelle 4**

| **Kosten-Gewinn-Studie** | | | | | |
|---|---|---|---|---|---|
| **Spezifikation** | **Gruppe⁽¹⁾** | | | | |
| | **C** | **E1** | **E2** | **E3** | **E4** |
| **Gesamtgewinn⁽²⁾** | 59.59 | 66.74 | 64.40 | 64.17 | 68.17 |
| **Futtermittelkosten** | 33.85 | 36.10 | 35.78 | 34.45 | 37.39 |
| **Nebenkosten⁽³⁾** | 14.50 | 14.50 | 14.50 | 14.50 | 14.50 |
| **Gesamtkosten⁽⁴⁾** | 48.35 | 50.60 | 50.28 | 48.95 | 51.89 |
| **Nettogewinn⁽⁵⁾** | 11.24 | 16.14 | 14.12 | 15.22 | 16.28 |
| **Nettogewinn pro** | 0.56 | 0.77 | 0.67 | 0.72 | 0.78 |
| **Hähnchen Differenz** | 0.00 | 0.21 | 0.11 | 0.16 | 0.22 |

| | | | | | |
|---|---|---|---|---|---|
| 1) C - Kontrollgruppe E1, 2, 3, 4 - Versuchsgruppe 2) Gesamtgewinn beim Verkauf der Hähnchen 3) Nebenkosten: Küken, Energie, Abfall, Arbeit, Medikamente 4) Gesamtkosten = Futtermittelkosten + Nebenkosten 5) Nettogewinn = Gesamtgewinn - Gesamtkosten 6) Differenz = Nettogewinn pro Hähnchen in den Versuchsgruppen - Nettogewinn pro Hähnchen in der Kontrollgruppe | | | | | |

## Patentansprüche

1. Einen funktionsverbessernden Zusatz an feinteiliger Cellulose enthaltendes Futtermittel für in der Aufzucht oder in der Mast befindliche Nutztiere, **dadurch gekennzeichnet, daß** die Cellulose eine im Wesentlichen unlösliche reine fasrige Pulvercellulose mit Faserlängen von 50 - 2000 µm mit einem Anteil von mindestens 50 Gew.-% α-Cellulose ist.

2. Futtermittel nach Anspruch 1, **dadurch gekennzeichnet, daß** die Cellulose mindestens 90 Gew.-% α-Cellulose enthält.

3. Futtermittel nach einem Anspruch 1 oder 2, **dadurch gekennzeichnet, daß** die Cellulose aus Getreidefasem hergestellt ist.

4. Futtermittel nach einem der Ansprüche 1 bis 3, **dadurch gekennzeichnet, daß** der Zusatz an reiner Cellulose mit einem Zusatz eines prebiotischen Mittels kombiniert ist.

5. Futtermittel nach Anspruch 4, **dadurch gekennzeichnet, daß** das prebiotische Mittel ein Algenpräparat ist.

6. Futtermittel nach Anspruch 5, **dadurch gekennzeichnet, daß** das prebiotische Mittel ein modifiziertes Natrium-Alginat in Lösung ist.

7. Futtermittel nach Anspruch 5 oder 6, **dadurch gekennzeichnet, daß** das Algenpräparat aus der Braunalge Ascophyllum Nodosum gewonnen ist.

8. Futtermittel nach einem der Ansprüche 5 bis 7, **dadurch gekennzeichnet, daß** das Algenpräparat mindestens 5 Gew.-% bioverfügbarer Polyuronsäure enthält.

9. Futtermittel nach einem der Ansprüche 4 bis 8, **dadurch gekennzeichnet, daß** das prebiotische Mittel in einem Gewichtsanteil von 6 - 28 Gew.-% der Gesamtmenge des Zusatzes an reiner Cellulose und des prebiotischen Mittels zugegen ist.

10. Futtermittel nach einem der Ansprüche 1 bis 9, **dadurch gekennzeichnet, daß** der Zusatz an reiner Cellulose einschließlich des prebiotischen Mittels in einem Gewichtsanteil von 0,2 - 19 Gew.-% zugegen ist.

11. Futtermittel nach einem der Ansprüche 1 bis 10, für Tiere die stark konzentriert unter nicht natürlichen Bedingungen gehalten werden.

12. Futtermittel nach Anspruch 11, für Tiere in Mast oder Aufzuchtbatterien.

13. Futtermittel nach einem der Ansprüche 1 bis 12, als Nutzgeflügelfutter.

14. Futtermittel nach Anspruch 12 oder 13, als Hühnerfutter.

15. Futtermittel nach einem der Ansprüche 11 bis 14, **dadurch gekennzeichnet, daß** der Anteil des Zusatzes an reiner Cellulose und des Zusatzes an prebiotischem Mittel insgesamt 0,2 bis 3,0 Gew.-% des Futtermittels beträgt.

16. Futtermittel nach einem der Ansprüche 1 bis 12, als Schweinefutter.

17. Futtermittel nach Anspruch 16, **dadurch gekennzeichnet, daß** die Gesamtmenge des Zusatzes an reiner Cellulose und des Zusatzes an prebiotischem Mittel 0,3 bis 2,5 Gew.-% des Futtermittels beträgt.

18. Futtermittel nach einem der Ansprüche 1 bis 12, als Nutz-Fischfutter.

19. Futtermittel nach Anspruch 18, **dadurch gekennzeichnet, daß** der Anteil des Zusatzes an reiner Cellulose und des Zusatzes an prebiotischem Mittel insgesamt 0,3 bis 6 Gew.-% beträgt.

20. Futtermittel nach einem der Ansprüche 1 bis 12, als Kälberfutter.

21. Futtermittel nach Anspruch 1 bis 12, als Pelztierfutter.

22. Futtermittel nach einem der Ansprüche 1 bis 12, als Futtermittel für Kaninchen und sonstige Nager.

23. Futtermittel nach einem der Ansprüche 1 bis 12, als Futtermittel für Labortiere.

24. Verwendung eines Futtermittels nach einem der Ansprüche 1 bis 10, für Tiere die stark konzentriert unter nicht natürlichen Bedingungen gehalten werden.

25. Verwendung eines Futtermittels nach Anspruch 11, für Tiere in Mast oder Aufzuchtbatterien.

26. Verwendung eines Futtermittels nach einem der Ansprüche 1 bis 12, als Nutzgeflügelfutter.

27. Verwendung eines Futtermittels nach Anspruch 25 oder 26, als Hühnerfutter.

28. Verwendung eines Futtermittels nach einem der Ansprüche 24 bis 27, **dadurch gekennzeichnet, daß** der Anteil des Zusatzes an reiner Cellulose und des Zusatzes an prebiotischem Mittel insgesamt 0,2 bis 3,0 Gew.-% des Futtermittels beträgt.

29. Verwendung eines Futtermittels nach einem der Ansprüche 1 bis 12, als Schweinefutter.

30. Verwendung eines Futtermittels nach Anspruch 29, **dadurch gekennzeichnet, daß** die Gesamtmenge des Zusatzes an reiner Cellulose und des Zusatzes an prebiotischem Mittel 0,3 bis 2,5 Gew.-% des Futtermittels beträgt.

31. Verwendung eines Futtermittels nach einem der Ansprüche 1 bis 12, als Nutz-Fischfutter.

32. Verwendung eines Futtermittels nach Anspruch 31, **dadurch gekennzeichnet, daß** der Anteil des Zusatzes an reiner Cellulose und des Zusatzes an prebiotischem Mittel insgesamt 0,3 bis 6 Gew.-% beträgt.

33. Verwendung eines Futtermittels nach einem der Ansprüche 1 bis 12, als Kälberfutter.

34. Verwendung eines Futtermittels nach Anspruch 1 bis 12, als Pelztierfutter.

35. Verwendung eines Futtermittels nach einem der Ansprüche 1 bis 12, als Futtermittel für Kaninchen und sonstige Nager.

36. Verwendung eines Futtermittels nach einem der Ansprüche 1 bis 12, als Futtermittel für Labortiere.

## Claims

1. Feedstuff containing a function-improving additive of finely divided cellulose for farmed animals which are being reared or fattened, **characterised in that** the cellulose is a substantially insoluble pure fibrous powdered cellulose with fibre lengths of from 50 to 2000 µm with a proportion of at least 50 % by weight of α-cellulose.

2. Feedstuff according to Claim 1, **characterised in that** the cellulose contains at least 90 % by weight of α-cellulose.

3. Feedstuff according to Claim 1 or 2, **characterised in that** the cellulose is produced from cereal fibres.

4. Feedstuff according to any one of Claims 1 to 3, **characterised in that** the additive of pure cellulose is combined with an additive of a prebiotic agent.

5. Feedstuff according to Claim, **characterised in that** the prebiotic agent is an algal preparation.

6. Feedstuff according to Claim 5, **characterised in that** the prebiotic agent is a modified sodium alginate in solution.

7. Feedstuff according to Claim 5 or 6, **characterised in that** the algal preparation is obtained from the brown alga Ascophyllum Nodosum.

8. Feedstuff according to any one of Claims 5 to 7, **characterised in that** the algal preparation contains at least 5 % by weight of bioavailable polyuronic acid.

9. Feedstuff according to any one of Claims 4 to 8, **characterised in that** the prebiotic agent is present in a proportion of 6 to 28 % by weight of the total amount of the pure cellulose additive and of the prebiotic agent.

10. Feedstuff according to any one of Claims 1 to 9, **characterised in that** the additive of pure cellulose including the prebiotic agent is present in a proportion of 0.2 to 19 % by weight.

11. Feedstuff according to any one of Claims 1 to 10, for animals which are kept in high density under conditions which are not natural.

12. Feedstuff according to Claim 11, for animals which are battery-reared or fattened.

13. Feedstuff according to any one of Claims 1 to 12, as a commercial poultry feed.

14. Feedstuff according to Claim 12 or 13, as chicken feed.

15. Feedstuff according to any one of Claims 11 to 14, **characterised in that** the proportion of the additive of pure cellulose and of the additive of a prebiotic agent totals 0.2 to 3.0 % by weight of the feedstuff.

16. Feedstuff according to any one of Claims 1 to 12, as pig feed.

17. Feedstuff according to Claim 16, **characterised in that** the total amount of the additive of pure cellulose and of the additive of a prebiotic agent amounts to 0.3 to 2.5 % by weight of the feedstuff.

18. Feedstuff according to any one of Claims 1 to 12, as a commercial fish feed.

19. Feedstuff according to Claim 18, **characterised in that** the proportion of the additive of pure cellulose and of the additive of a prebiotic agent totals 0.3 to 6 % by weight.

20. Feedstuff according to any one of Claims 1 to 12, as a feed for calves.

21. Feedstuff according to Claims 1 to 12, as a feed for furred animals.

22. Feedstuff according to any one of Claims 1 to 12, as a feedstuff for rabbits and other rodents.

23. A feedstuff according to any one of Claims 1 to 12, as a feedstuff for laboratory animals.

24. Use of a feedstuff according to any one of Claims 1 to 10, for animals which are kept in high density under conditions which are not natural.

25. Use of a feedstuff according to Claim 11, for animals which are battery-reared or fattened.

26. Use of a feedstuff according to any one of Claims 1 to 12, as a commercial poultry feed.

27. Use of a feedstuff according to Claim 25 or 26, as chicken feed.

28. Use of a feedstuff according to any one of Claims 24 to 27, **characterised in that** the proportion of the additive of pure cellulose and of the additive of a prebiotic agent totals 0.2 to 3.0 % by weight of the feedstuff.

29. Use of a feedstuff of according to any one of Claims 1 to 12, as pig feed.

30. Use of a feedstuff of according to Claim 29, **characterised in that** the total amount of the additive of pure cellulose and of the additive of prebiotic agent amounts to 0.3 to 2.5 % by weight of the feedstuff.

31. Use of a feedstuff of according to any one of Claims 1 to 12, as a commercial fish feed.

32. Use of a feedstuff of according to Claim 31, **characterised in that** the proportion of the additive of pure cellulose and of the additive of a prebiotic agent totals 0.3 to 6 % by weight.

33. Use of a feedstuff of according to any one of Claims 1 to 12, as a feed for calves.

34. Use of a feedstuff of according to Claims 1 to 12, as a feed for furred animals.

35. Use of a feedstuff according to any one of Claims 1 to 12, as a feedstuff for rabbits and other rodents.

36. Use of a feedstuff according to any one of Claims 1 to 12, as a feedstuff of for laboratory animals.

## Revendications

1. Produit alimentaire contenant un additif d'amélioration fonctionnel de cellulose finement divisé pour des animaux domestiques, d' élevage ou d'engraissement,
**caractérisé en ce que**
la cellulose est une poudre de cellulose purement fibreuse, pratiquement insoluble ayant une longueur de fibre de 50-2000 µm avec une teneur en cellulose α représentant au moins 50 % en poids.

2. Aliment selon la revendication 1,
**caractérisé en ce que**
la cellulose contient au moins 90 % en poids de cellulose α.

3. Aliment selon l'une des revendications 1 ou 2,
**caractérisé en ce que**
la cellulose est fabriquée à partir de fibres de céréales.

4. Aliment selon l'une des revendications 1 à 3,
**caractérisé en ce que**
l'additif en cellulose pure est combiné à un additif en agent prébiotique.

5. Aliment selon la revendication 4,
**caractérisé en ce que**
l'agent prébiotique est une préparation d'algues.

6. Aliment selon la revendication 5,
**caractérisé en ce que**
l'agent prébiotique est une solution d'alginate de sodium modifié.

7. Aliment selon l'une des revendications 5 ou 6,
**caractérisé en ce que**
la préparation d'algues est obtenue à partir de l'algue brune Ascophyllum Nodosum.

8. Aliment selon l'une des revendications 5 à 7,
**caractérisé en ce que**
la préparation d'algues contient au moins 5 % en poids d'acide Polyurique d'origine biologique.

9. Aliment selon l'une des revendications 4 à 8,
**caractérisé en ce que**
l'agent prébiotique est ajouté suivant une teneur pondérale de 6 à 28 % en poids de la quantité totale d'additif à de la cellulose pure ou à l'agent prébiotique.

10. Aliment selon l'une des revendications 1 à 9,
**caractérisé en ce que**
l'additif en cellulose pure y compris l'agent prébiotique représente une teneur pondérale de 0,2-19 % en poids.

11. Aliment selon l'une des revendications 1 à 10, pour des animaux, stocké à l'état fortement concentré et dans des conditions non naturelles.

12. Aliment selon la revendication 11,
**caractérisé en ce qu'**
il est destiné à des animaux de graissage ou d'élevage en batterie.

13. Aliment selon l'une des revendications 1 à 12,
**caractérisé en ce qu'**
il s'agit d'un aliment pour des volailles domestiques.

14. Aliment selon l'une des revendications 12 à 13,
**caractérisé en ce qu'**
il s'agit d'un aliment pour poules.

15. Aliment selon l'une des revendications 11 à 14,
**caractérisé en ce que**
la teneur en additif en cellulose pure et en additif en agent prébiotique représente globalement entre 0,2 à 3 % en poids de l'aliment.

16. Aliment selon l'une des revendications 1 à 12,
**caractérisé en ce qu'**
il s'agit d'un aliment pour porcs.

17. Aliment selon la revendication 16,
**caractérisé en ce que**
la quantité totale d'additif à la cellulose pure et d'additif en agent prébiotique représente entre 0,3 et 2,5 % en poids de l'aliment.

18. Aliment selon l'une des revendications 1 à 12,
**caractérisé en ce qu'**
il s'agit d'un aliment pour poissons.
Aliment selon l'une des revendications 1 à 12,
**caractérisé en ce qu'**

19. Aliment selon la revendication 18,
**caractérisé en ce que**
la teneur en additif en cellulose pure et en additif en agent prébiotique représente globalement 0,3 à 6 % en poids.

20. Aliment selon l'une des revendications 1 à 12, comme aliment pour les veaux.

21. Aliment selon l'une des revendications 1 à 12, comme aliment pour les animaux à fourrure.

22. Aliment selon l'une des revendications 1 à 12, comme aliment pour les lapins et autres rongeurs.

23. Aliment selon l'une des revendications 1 à 12, comme aliment d'animaux de laboratoire.

24. Utilisation d'un aliment selon l'une des revendications 1 à 10 pour les animaux, que l'on gère de manière fortement concentrée et dans des conditions non naturelles.

25. Utilisation d'un aliment selon la revendication 11 pour des animaux en graissage ou en élevage en batterie.

26. Utilisation selon l'une des revendications 1 à 12, pour des volatiles utilitaires.

27. Utilisation selon l'une des revendications 25 ou 26, comme aliment pour les volailles.

28. Utilisation d'un aliment selon l'une des revendications 24 à 27,
**caractérisée en ce que**
la teneur en additif en cellulose pure et en additif en agent prébiotique représente globalement 0,2 à 3 % en poids de l'aliment.

29. Utilisation d'un aliment selon l'une des revendications 1 à 12, comme aliment pour porcs.

30. Utilisation d'un aliment selon la revendication 29,
**caractérisée en ce que**
la teneur totale en additif en cellulose pure et en additif en agent prébiotique représente entre 0,3 et 2,5 % en poids de l'aliment.

31. Utilisation d'un aliment selon l'une des revendications 1 à 12, comme aliment pour les poissons.

32. Utilisation d'un aliment selon la revendication 31,
**caractérisée en ce que**
la teneur en additif en cellulose pure et en additif en agent prébiotique représente en tout entre 0,3 et 6 % en poids.

33. Utilisation d'un aliment selon l'une des revendications 1 à 12, comme aliment pour les veaux.

34. Utilisation d'un aliment selon l'une des revendications 1 à 12, pour les animaux à fourrure.

35. Utilisation d'un aliment selon l'une des revendications 1 à 12, comme aliment pour des lapins ou autres rongeurs.

36. Utilisation d'un aliment selon l'une des revendications 1 à 12, comme aliment pour des animaux de laboratoire.
